# EUROPÄISCHE PATENTANMELDUNG

(11) **EP 3 637 578 A1**
(43) Veröffentlichungstag der Anmeldung: **15.04.2020**
(21) Anmeldenummer: 19197494.8
(22) Anmeldetag: 16.09.2019
(51) Int. Cl.: H02J 7/00

(54) **STEUERUNGSSYSTEM ZUR STEUERUNG WENIGSTENS EINES HOCHVOLTSPEICHERS**

(30) Priorität: 11.10.2018 DE 102018125178
(71) Anmelder: Belectric GmbH, 97509 Kolitzheim (DE)
(72) Erfinder: MÜLLER, Tim, 01477 Arnsdorf (DE); MADEMANN, Lars, 01328 Dresden (DE); FALLANT, Lars, 01069 Dresden (DE); LIEBSCHER, Manfred, 01099 Dresden (DE)
(74) Vertreter: Bauer, Daniel

(57) **Zusammenfassung**

Die Erfindung betrifft ein Steuerungssystem zur Steuerung wenigstens eines Hochvoltspeichers (10), wobei der Hochvoltspeicher (10) ein Batteriemanagementsystem (14) aufweist. Das Batteriemanagementsystem (14) ist über ein dediziertes Protokoll steuerbar, wobei eine Steuereinheit (20) über eine Datenleitung (12) mit dem Batteriemanagementsystem (14) verbunden ist. Auf der Steuereinheit (20) ist eine Programminstanz zur Nutzung des dedizierten Protokolls implementiert, wodurch das Batteriemanagementsystem (14) des Hochvoltspeichers (10) steuerbar ist. Die Steuereinheit (20) ist drahtlos über einen Funkkanal (24) datentechnisch an eine Zentraleinheit (22) verbunden, wobei über den Funkkanal (24) Steuerungsdaten von der Zentraleinheit (22) zu der Steuereinheit (20) übertragbar sind.

## Beschreibung

Die Erfindung betrifft ein Steuerungssystem zur Steuerung wenigstens eines Hochvoltspeichers gemäß dem unabhängigen Anspruch 1.

Es ist aus dem Stand der Technik bekannt, dass Hochvoltspeicher zur Speicherung von elektrischer Energie genutzt werden. Der Speicherung von elektrischer Energie kommt einer besonderen Bedeutung im Umfeld der Erzeugung elektrischer Energie zu, insbesondere im Umfeld von erzeugter Energie durch Windkraftwerke und/oder Photovoltaik-Modulen. Zur Erhöhung der Speicherkapazität können dabei mehrere Hochvoltspeicher seriell und/oder parallel miteinander verschaltet werden.

Als nachteilig hat sich herausgestellt, dass die Nutzung eines Hochvoltspeichers mit einem Batteriemanagementsystem, das durch ein dediziertes Protokoll steuerbar ist, nur mit einem erhöhtem Aufwand genutzt werden kann. Daher stellt die Nutzung eines Hochvoltspeichers, insbesondere aus dem Automotive-Bereich, besondere Anforderungen an die Steuerung, um diese für die Speicherung von erneuerbaren Energien zu nutzen. Ein Hochvoltspeicher weist ein Gehäuse auf, insbesondere ein geschlossenes metallisches Gehäuse, wobei in dem Gehäuse ein Zellenpack aus Reihen- und Parallelschaltung angeordnet ist. Die Steuerung eines Energieflusses des Zellenpacks erfolgt durch das Batteriemanagementsystem, welches über das dedizierte Protokoll ansteuerbar ist. Das dedizierte Protokoll des Hochvoltspeichers eines Elektroautos ist genau für die bestimmungsgemäße Nutzung in einem Kraftfahrzeug entwickelt worden. Eine Kaskadierung von artfremden Hochvoltspeichern z.B. aus dem Automotive-Bereich zu einem Batteriespeicherkraftwerk kann daher nicht durch eine einfache Reihen- und Parallelschaltung der einzelnen Hochvoltspeicher erfolgen.

Es ist daher Aufgabe der vorliegenden Erfindung, die voranstehenden Nachteile zumindest teilweise zu beheben. Insbesondere ist es Aufgabe der vorliegenden Erfindung, Hochvoltspeicher mit einem dedizierten Protokoll derart zu kaskadieren, dass diese für den Betrieb in einem Batteriespeicherkraftwerk nutzbar sind.

Die voranstehenden Aufgabe wird gelöst durch ein Steuerungssystem mit den Merkmalen des Anspruchs 1. Weitere Merkmale und Details der Erfindung ergeben sich aus den jeweiligen Unteransprüchen, der Beschreibung und den Zeichnungen.

Das erfindungsgemäße Steuerungssystem dient zur Steuerung wenigstens eines Hochvoltspeichers. Der Hochvoltspeicher weist ein Batteriemanagementsystem auf, wobei das Batteriemanagementsystem über ein dediziertes Protokoll steuerbar ist. Eine Steuereinheit ist über eine Datenleitung mit dem Batteriemanagementsystem verbunden. Auf der Steuereinheit ist eine Programminstanz zur Nutzung des dedizierten Protokolls implementiert, wodurch das Batteriemanagementsystem des Hochvoltspeichers steuerbar ist. Die Steuereinheit ist drahtlos über einen Funkkanal datentechnisch an eine Zentraleinheit verbunden, wobei über den Funkkanal Steuerungsdaten von der Zentraleinheit zu der Steuereinheit übertragbar sind. Dadurch kann der Hochvoltspeicher in seiner ursprünglichen Anwendungsform genutzt werden. In dem Fall, dass der Hochvoltspeicher aus dem Automotive-Bereich kommt, kann die Programminstanz auf der Steuereinheit eine gesamte Fahrzeugumgebung simulieren, so dass das dedizierte Protokoll nutzbar ist. Durch diese Fahrzeugsimulation, kann demnach der Hochvoltspeicher aus dem Automotive-Bereich gemäß der Vorgabe des Betriebes eines Kraftfahrzeuges betrieben werden. Der Hochvoltspeicher kann damit baulich unverändert, d.h. mit seiner gesamten ursprünglichen Peripherie genutzt werden. Der Hochvoltspeicher weist dabei ein Gehäuse auf, insbesondere ein metallisches Gehäuse, in dem insbesondere ein Zellenpack bestehend aus Reihen- und/oder Parallelschaltung, ein internes Steuergerät, ein Batteriemanagementsystem und eine Sensorik angeordnet sein kann. Zudem kann das Gehäuse eine zweipolige DC-Schnittstelle aufweisen, wobei an jedem Pol der zweipoligen DC-Schnittstelle ein Schalter angeordnet sein. Die DC-Schnittstelle versorgt das interne Steuergerät mit Energie. Über eine CAN-Busschnittstelle können die Schalter, die Sensorik und/oder das Batteriemanagementsystem angesprochen werden. Damit können artfremde Hochvoltspeicher zum Aufbau eines stationären Batteriespeicherkraftwerks sicher gesteuert und genutzt werden. Messdaten können zwischen der Zentraleinheit und der Steuereinheit permanent übertragen werden. Die Datenübermittelung zwischen das Batteriemanagementsystem und der Steuereinheit erfolgt über die Datenleitung. Die Übertragung der Daten kann dabei über einen CAN-Bus erfolgen. Die Steuereinheit übermittelt die Messdaten per Funk an die Kontrolleinheit. Über den Funkkanal und der Datenleitung können die Daten bidirektional übertragen werden. Die zentrale Aufgabe der Steuereinheit ist das Emulieren einer Fahrzeugumgebung und die Übertragung von Informationen und Steuerbefehlen via Funk an die Zentraleinheit. Durch die Nutzung eines Funkkanals zwischen der Steuereinheit und der Zentraleinheit können EMV-Probleme vermieden werden. Lange Kabelwege zwischen Steuereinheit und Zentraleinheit entfallen, wodurch eine hohes Potential an Störeinstreuung verringert wird. Durch den Entfall einer leitungsgebundenen Lösung zwischen der Steuereinheit und der Zentraleinheit kann ebenfalls eine höhere Packungsdichte der Hochvoltspeicher erzielt werden. Durch die Nutzung eines Funkkanals können hohe Spannungsschwanken gegenüber Erde durch transiente Schaltvorgänge vermieden werden.

Vorteilhafterweise kann vorgesehen sein, die Steuereinheit an eine externe von dem Hochvoltspeicher unabhängige Stromversorgung zur energetischen Versorgung anschließbar ist. Die Steuereinheit weist ein galvanisch getrenntes Netzteil auf, wodurch eine galvanische Trennung zwischen dem Hochvoltspeicher und der externen Stromversorgung erfolgt. Durch die galvanische Trennung ist das elektrische Potential des Hochvoltspeichers von der externen Stromversorgung getrennt, d.h. untereinander potentialfrei. Im Falle, dass zwei Hochvoltspeicher in Reihe geschaltet werden, kann eine untypische Verschaltung der Hochvoltspeicher erfolgen. Damit kann die Eigensicherheit des Hochvoltspeichers eingeschränkt sein. Im Fehlerfall erfolgt damit eine elektrische Sicherheit beim Betrieb des stationären Batteriespeicherkraftwerks. Es kann damit ein vollständiger Berührschutz gegenüber dem Batteriespeicherkraftwerk gewährleistet werden.

In einer weiteren Möglichkeit kann vorgesehen sein, dass Daten über einen zweiten Funkkanal zwischen wenigstens zwei Steuereinheiten austauschbar sind. Dies erhöht die Ausfallsicherheit des gesamten Batteriespeicherkraftwerks. Damit können die Daten einer ersten Steuereinheit über eine zweite Steuereinheit an die Zentraleinheit übertragen werden. Dies erhöht die Kommunikationssicherheit der einzelnen Steuereinheiten mit der Zentraleinheit.

Weiterhin kann es vorteilhaft sein, dass wenigstens eine zweite Zentraleinheit mit der Steuereinheit redundant verbindbar ist. Durch die redundante Nutzung einer zweiten Zentraleinheit kann ein Ausfall des gesamten Batteriespeicherkraftwerks vermieden werden. Dazu kann die redundante zweite Zentraleinheit die Aufgaben der Zentraleinheit übernehmen. Die redundante Zentraleinheit kann bis zur Übernahme den gesamte Datentransfer der Steuereinheiten, welche zwischen der Zentraleinheit und den Steuereinheiten erfolgt, erfassen. So kann im Falle eines Ausfalls die zweite Zentraleinheit die Aufgaben der Zentraleinheit übernehmen. Dazu kann vorgesehen sein, dass die Zentraleinheit an die zweite Zentraleinheit in einem bestimmten Intervall Statusdaten sendet. Dabei kann die zweite Zentraleinheit die Aufgaben der ersten Zentraleinheit übernehmen, wenn die Auswertung der Statusdaten durch die zweite Zentraleinheit eine Notwendigkeit der Übernahme ergibt. Ebenfalls ist es denkbar, dass bei Ausfall der Übermittelung von Statusdaten an die zweite Zentraleinheit, die zweite Zentraleinheit sofort die Kontrolle der Steuereinheiten übernimmt.

Es ist denkbar, dass die Steuereinheit in einem elektrisch isolierten Gehäuse angeordnet ist. Damit wird ein wirksamer Berührungsschutz erzielt, so dass insgesamt die elektrische Sicherheit der Batteriespeicherkraftwerks erhöht werden kann.

Zudem ist es im Rahmen der Erfindung denkbar, dass bevorzugt 92 Hochvoltspeicher elektrisch verschaltet sind. Dazu können jeweils zwei Hochvoltspeicher in Reihe zu einem Strang geschaltet werden. Die dadurch entstehenden 46 Stränge können parallel zu einem Gesamtverbund geschaltet werden. Eine Hochvoltspeicher kann dabei z.B. eine Spannung von 400 V aufweisen, womit dementsprechend jeder Strang eine Spannung von 800 V zur Verfügung stellen kann.

Es ist denkbar, dass der Hochvoltspeicher über eine Schaltvorrichtung abschaltbar ist. Die Schaltvorrichtung ist mit der Steuereinheit über eine Steuerleitung gekoppelt. Durch die Schaltvorrichtung können alle Hochvoltspeicher von dem Wechselrichter elektrisch entkoppelt werden. Dies kann durch eine Schaltvorrichtung erfolgen, welche am Eingang des Wechselrichters geschaltet ist. Auch ist es denkbar, dass einzelne Stränge aus dem Gesamtverbund über eine Schaltvorrichtung abgeschaltet werden können. Der Befehl zur Abschaltung kann dabei über die Zentraleinheit erfolgen. Ebenfalls ist es denkbar, dass die Steuereinheit einen Fehlerfall detektiert, so dass die Steuereinheit die Schaltvorrichtung zur Unterbrechung des Energieflusses aktiviert. Zudem kann bei einem erkannten Defekt, welcher durch das Batteriemanagementsystem oder der Steuereinheit erfasst wird die Schaltvorrichtung aktiviert werden. Die Zentraleinheit kann Daten auf Fehlercodes analysieren, welche von der Steuereinheit zur Zentraleinheit übermittelt werden können. Im Falle eines empfangenden Fehlercodes kann die Zentraleinheit durch einen Befehl an die Steuereinheit den Strang aus dem Gesamtverbund abschalten oder die gesamten Hochvoltspeicher von dem Wechselrichter entkoppeln. Die Schaltvorrichtung kann dabei ein Schütz oder Relais sein. Über die Steuerleitung kann dabei eine Spannung zur Aktivierung des Schützes oder Relais angelegt werden, wobei die Spannung durch die Steuereinheit gesteuert wird. Es kann eine Spannung von 12V oder 24V Gleichspannung zum Einsatz kommen. Aber auch 230V Wechselspannung sind dabei denkbar.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig.1: Eine schematische Darstellung eines Hochvoltspeicher mit einer Steuereinheit und einer Zentraleinheit,
- Fig.2: eine schematische Darstellung zweier Hochvoltspeicher mit zwei Steuereinheiten und einer Zentraleinheit und
- Fig.3: eine schematische Darstellung mehrerer Hochvoltspeicher in einem Gesamtverbund.

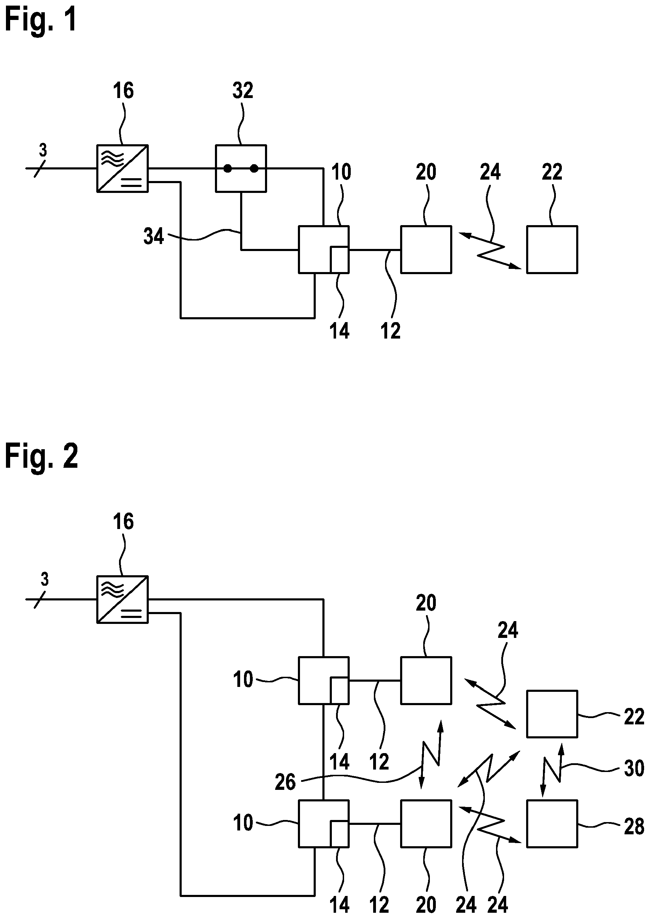

Figur 1 zeigt eine schematische Darstellung eines Hochvoltspeichers 10 mit einer Steuereinheit 20 und einer Zentraleinheit 22. Der Hochvoltspeicher 10 weist ein Batteriemanagementsystem 14 auf, wobei das Batteriemanagementsystem 14 über eine Datenleitung 12 mit einer Steuereinheit 20 verbunden ist. Auf der Steuereinheit 20 ist eine Programminstanz implementiert. Der Hochvoltspeicher 10 ist dabei an einem Wechselrichter 16 angeschlossen. Die Steuereinheit 20 kommuniziert dabei über einen Funkkanal 24 mit einer Zentraleinheit 22. Das Batteriemanagementsystem 14 kann über eine CAN-Bus-Schnittstelle mit einem definierten Protokoll gesteuert werden. Dabei können zwischen der Programminstanz auf der Steuereinheit 20 und dem dedizierten Protokoll Daten ausgetauscht werden. Ein Schaltvorrichtung 32 ist an dem Eingang des Wechselrichters 16 elektrisch gekoppelt. Die Schaltvorrichtung 32 wird durch die Steuereinheit 10 über eine Steuerleitung 34 gesteuert. Damit kann der Hochvoltspeicher 10 vom Wechselrichter 16 elektrisch entkoppelt werden.

Figur 2 zeigt eine schematische Darstellung zweier Hochvoltspeicher 10 mit zwei Steuereinheiten 20 und einer Zentraleinheit 22. Die beiden Hochvoltspeicher 10 sind in Reihe geschaltet. Jeder Hochvoltspeicher 10 weist ein Batteriemanagementsystem 14 auf, welches mit einer Datenleitung 12 an eine Steuereinheit 20 datentechnisch verbunden ist. Die erreichte Gleichspannung der in Reihe geschalteten Hochvoltspeicher 10 sind mit einem Wechselrichter 16 verbunden. Die Steuereinheiten 20 können über einen zweiten Funkkanal 26 Daten austauschen. Jede Steuereinheit 20 ist dabei über einen Funkkanal 24 datentechnisch verbunden. Eine zweite Zentraleinheit 28 ist über einen dritten Funkkanal 30 mit der Zentraleinheit 22 datentechnisch verbunden. Im Falle eines Ausfalls der Zentraleinheit 22 kann die zweite Zentraleinheit 28 die gesamte Funktion der Zentraleinheit 22 übernehmen. Die zweite Zentraleinheit 28 ist ebenfalls über einen Funkkanal 24 mit den Steuereinheiten 20 verbunden. Allerdings greift die zweite Zentraleinheit 28 nicht aktiv in die Steuerung der Steuereinheiten 20 ein, solange die Zentraleinheit 22 noch funktionsfähig ist.

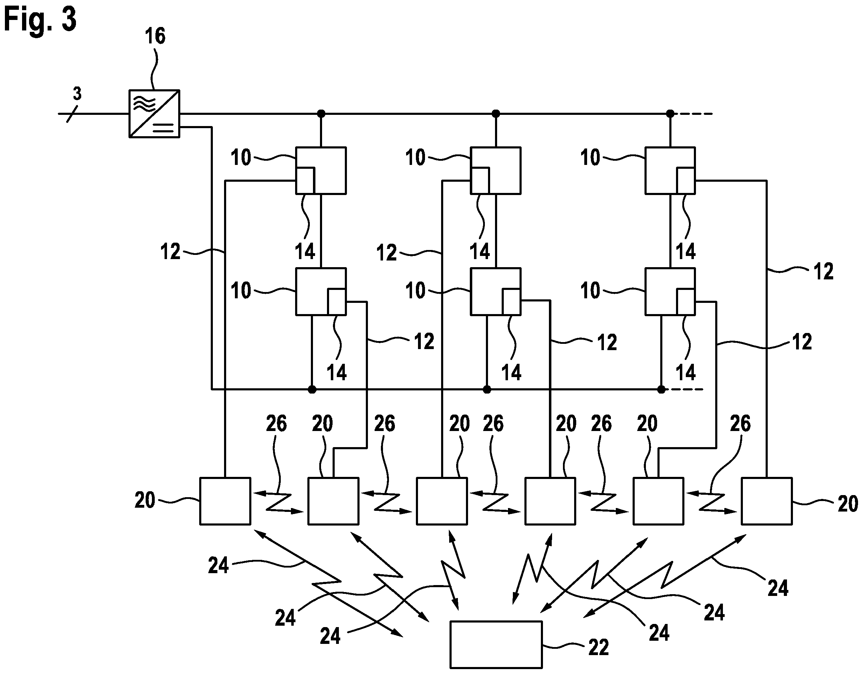

Figur 3 zeigt eine schematische Darstellung mehrerer Hochvoltspeicher 10 in einem Gesamtverbund. Jeweils zwei Hochvoltspeicher 10 sind in Reihe geschaltet. Jeder in Reihe geschaltete Hochvoltspeicher 10 bildet einen Strang. Die sich bildenden Stränge sind parallel zueinander geschaltet, wobei die dadurch erzeugte Gleichspannung einem Wechselrichter 16 zugeführt wird. Jeder Hochvoltspeicher 10 weist ein Batteriemanagementsystem 14 auf, wobei das Batteriemanagementsystem 14 über eine Datenleitung mit einer Steuereinheit 20 verbunden ist. Die Steuereinheiten 20 können untereinander Daten über einen zweiten Funkkanal 26 austauschen. Die Steuereinheiten 20 sind über einen Funkkanal mit einer Zentraleinheit 22 verbunden.

### Bezugszeichenliste

- 10: Hochvoltspeicher
- 12: Datenleitung
- 14: Batteriemanagementsystem
- 16: Wechselrichter
- 20: Steuereinheit
- 22: Zentraleinheit
- 24: Funkkanal
- 26: zweiter Funkkanal
- 28: zweite Zentraleinheit
- 30: dritter Funkkanal
- 32: Schaltvorrichtung
- 34: Steuerleitung

## Patentansprüche

1. Steuerungssystem zur Steuerung wenigstens eines Hochvoltspeichers (10), wobei der Hochvoltspeicher (10) ein Batteriemanagementsystem (14) aufweist und das Batteriemanagementsystem (14) über ein dediziertes Protokoll steuerbar ist, **dadurch gekennzeichnet, dass**
eine Steuereinheit (20) über eine Datenleitung (12) mit dem Batteriemanagementsystem (14) verbunden ist, wobei auf der Steuereinheit (20) eine Programminstanz zur Nutzung des dedizierten Protokolls implementiert ist, wodurch das Batteriemanagementsystem (14) des Hochvoltspeichers (10) steuerbar ist, wobei die Steuereinheit (20) drahtlos über einen Funkkanal (24) datentechnisch an eine Zentraleinheit (22) verbunden ist und über den Funkkanal (24) Steuerungsdaten von der Zentraleinheit (22) zu der Steuereinheit (20) übertragbar sind.

2. Steuerungssystem zur Steuerung wenigstens eines Hochvoltspeichers (10) nach Anspruch 1, **dadurch gekennzeichnet, dass**
die Steuereinheit (20) an eine externe von dem Hochvoltspeicher (10) unabhängige Stromversorgung zur energetischen Versorgung anschließbar ist, wobei die Steuereinheit (20) ein galvanisch getrenntes Netzteil aufweist, wodurch eine galvanische Trennung zwischen dem Hochvoltspeicher (10) und der externen Stromversorgung erfolgt.

3. Steuerungssystem zur Steuerung wenigstens eines Hochvoltspeichers (10) nach Anspruch 1 oder 2, **dadurch gekennzeichnet, dass**
Daten über einen zweiten Funkkanal (26) zwischen wenigstens zwei Steuereinheiten (20) austauschbar sind.

4. Steuerungssystem zur Steuerung wenigstens eines Hochvoltspeichers (10) nach einem der vorhergehenden Ansprüche, **dadurch gekennzeichnet, dass**
wenigstens eine zweite Zentraleinheit (28) mit der Steuereinheit (20) redundant verbindbar ist.

5. Steuerungssystem zur Steuerung wenigstens eines Hochvoltspeichers (10) nach einem der vorhergehenden Ansprüche, **dadurch gekennzeichnet, dass**
die Steuereinheit in einem elektrisch isolierten Gehäuse angeordnet ist.

6. Steuerungssystem zur Steuerung wenigstens eines Hochvoltspeichers (10) nach einem der vorhergehenden Ansprüche, **dadurch gekennzeichnet, dass**
bevorzugt 92 Hochvoltspeicher (10) elektrisch verschaltet sind.

7. Steuerungssystem zur Steuerung wenigstens eines Hochvoltspeichers (10) nach einem der vorhergehenden Ansprüche, **dadurch gekennzeichnet, dass**
der Hochvoltspeicher (10) über eine Schaltvorrichtung (32) abschaltbar ist.
